(19) Europäisches Patentamt / European Patent Office / Office européen des brevets

(11) **EP 3 967 520 B1**

(12) **EUROPEAN PATENT SPECIFICATION**

(45) Date of publication and mention of the grant of the patent:
**03.01.2024 Bulletin 2024/01**

(21) Application number: **21192695.1**

(22) Date of filing: **24.08.2021**

(51) International Patent Classification (IPC):
**B60C 11/03** $^{(2006.01)}$     B60C 99/00 $^{(2006.01)}$

(52) Cooperative Patent Classification (CPC):
**B60C 11/0332;** B60C 99/006; B60C 2011/0355; B60C 2011/0367

(54) **TIRE HAVING TREAD GROOVES**

REIFEN MIT LAUFFLÄCHENRILLEN

PNEU COMPORTANT DES RAINURES DE BANDES DE ROULEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2020 JP 2020152301**

(43) Date of publication of application:
**16.03.2022 Bulletin 2022/11**

(73) Proprietor: **Sumitomo Rubber Industries, Ltd. Kobe-shi, Hyogo-ken 651-0072 (JP)**

(72) Inventors:
• **INADA, Yutaro**
  **Kobe-shi, 651-0072 (JP)**
• **FUJIWARA, Keisuke**
  **Kobe-shi, 651-0072 (JP)**

(74) Representative: **Manitz Finsterwald Patent- und Rechtsanwaltspartnerschaft mbB Martin-Greif-Strasse 1 80336 München (DE)**

(56) References cited:
**EP-A1- 3 689 639**      **CN-A- 101 665 063**
**DE-A1-102008 055 498**      **DE-T5-112014 002 971**
**JP-A- 2014 168 997**      **US-A1- 2016 101 582**
**US-A1- 2019 381 836**

EP 3 967 520 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field

The present invention relates to a tire whose tread portion is provided with tread grooves.

### Background art

Patent Document 1 below discloses a pneumatic tire, of which tread portion is provided with a plurality of main grooves extending in the tire circumferential direction, and of which wear resistance is improved by specifically defining the profile of the tread portion.
Patent Document 1: Japanese Patent Application Publication No. 2019-182339
A pneumatic tire in accordance with the preamble of claim 1 is known from DE 10 2008 055498 A1. Related tires are known from JP 2014 168997 A and US 2019/381836 A1.

### Summary of the invention

#### Problems to be solved by the invention

In the pneumatic tire of the Patent Document 1, all the main grooves have the same groove depth. Such groove depth, namely, a relatively large groove depth, is liable to become a noise sound source. Thus, with respect to the generation of noise sound due to the deep main grooves, further improvement is desired.
The present invention was made in view of the above problems, and a primary object of the present invention is to provide a tire in which, by specifically defining groove depths, noise performance can be improved while maintaining excellent wear resistance.
The object is solved by a tire having the features of claim 1. Sub-claims refer to preferred embodiments of the invention.

### Brief description of the drawings

Fig. 1 is a cross-sectional view of the tread portion of a tire as an embodiment of the present invention.
Fig. 2 is a diagram showing a ground contacting patch of the tire.
Fig. 3 is a cross-sectional view of the tread portion of a tire as another embodiment of the present invention.
Fig. 4 is a flowchart showing a method for determining groove depths, the method not being part of but useful for understanding the invention.

### Description of the Preferred Embodiments

The present invention can be applied to various tires such as pneumatic tires and non-pneumatic tires so called airless tires, for various vehicles such as passenger cars, heavy duty vehicles (truck and bus), two-wheeled vehicles, etc.
Taking a pneumatic tire for passenger cars as an example, embodiments of the present invention will now be described in detail in conjunction with accompanying drawings.

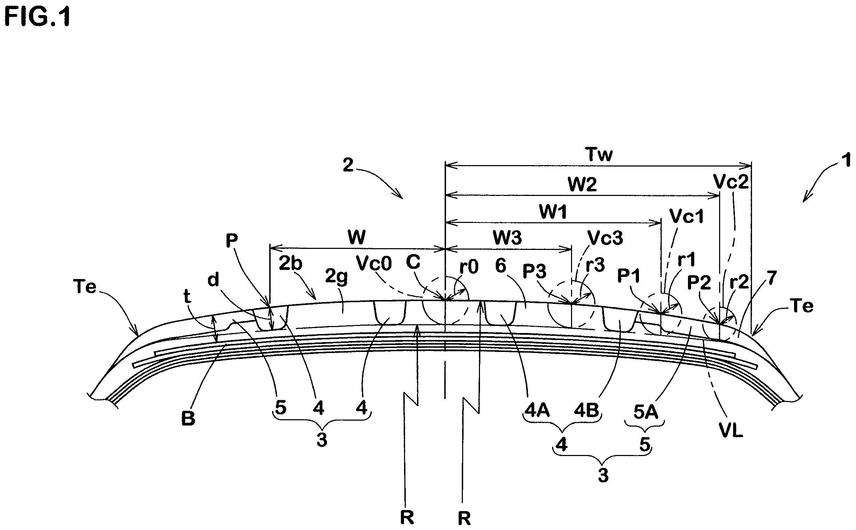

Fig. 1 shows the tread portion 2 of a tire 1 as an embodiment taken along a meridian cross-section of the tire under its standard state.
Here, in the case of a pneumatic tire, the "standard state" is such that the tire is mounted on a standard wheel rim and inflate to a standard pressure but loaded with no tire load.
In this application including specification and claims, various dimensions, positions and the like of the tire refer to those under the standard state unless otherwise noted.
The standard wheel rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used. The standard pressure and the standard tire load are the maximum air pressure and the maximum tire load for the tire specified by the same organization in the Air-pressure/Maximum-load Table or similar list.
For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at Various Cold Inflation Pressures" table in TRA or the like. The standard load is the "maximum load capacity" in JATMA, the "Load Capacity" in ETRTO, the maximum value given in the above-mentioned table in TRA or the like.

If there is no standard applicable to the tire, or not yet established, then a wheel rim, air pressure and tire load specified for the tire by the tire manufacturer or the like are used as the standard wheel rim, standard pressure and standard tire load.

The tread portion 2 has a tread surface contacting with the ground, and provided with a plurality of grooves 3 to expedite water drainage when running in wet conditions.

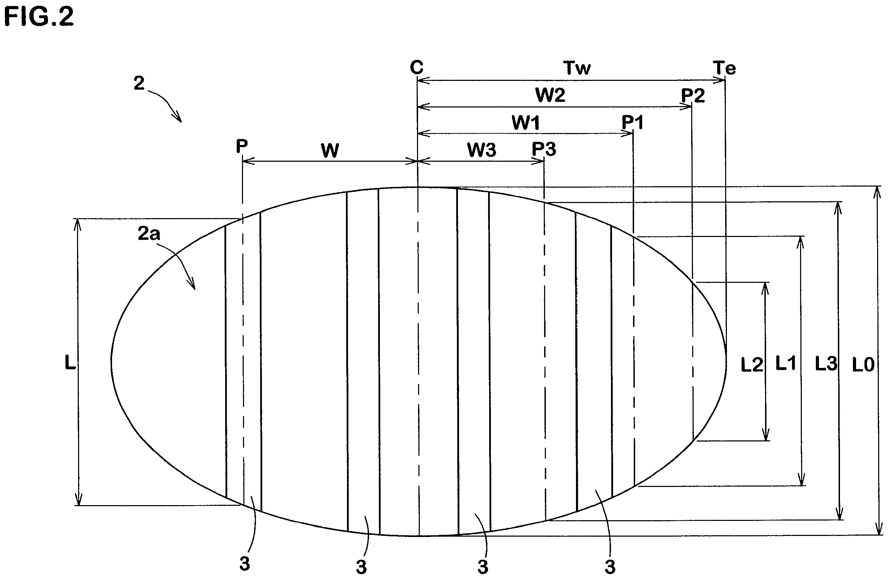

Fig. 2 is a diagram schematically showing a ground contacting patch 2a of the tread portion 2 which occurs when the tire 1 in its standard state is put on a flat horizontal surface at a camber angle of zero, and loaded with the standard tire load. As shown, the ground contacting patch 2a has ground contact lengths L in the tire circumferential direction at respective positions P in the tire axial direction.

The grooves 3 have respective groove depths d, and the groove depths d and the ground contact lengths L measured at axial positions P of the grooves 3 are in a relationship in which the respective groove depths d increase or decrease as the respective ground contact lengths L increase or decrease. By setting the groove depths d of the grooves 3 in this way, decreasing rates of the groove depths d due to the progress of the tread wear can be made almost constant. Thereby, even though the amount of wear is different depending on the axial position, the formation of an excessively large groove depth d can be prevented.

As a result, noise sound generated by the grooves 3 can be reduced. Thus, in the tire 1 of the present embodiment, the groove depths d of the grooves 3 are optimized, and the noise performance can be improved, while maintaining the excellent wear resistance performance.

It is preferable that a crown ground contact length L0 which is the ground contact length L at the tire equator C is 1.10 to 1.50 times a shoulder ground contact length which is the ground contact length L at an axial position spaced apart from the tire equator C by 80% of a half ground contact width Tw of the ground contacting patch 2a which is the axial distance from the tire equator C to one of axially outermost end Te of the ground contacting patch 2a.

Such ground contacting patch 2a is suitable for achieving both steering stability performance and wear resistance when the tire 1 is a pneumatic tire for passenger cars.

As shown in Fig. 1, the grooves 3 include circumferential grooves 4 (in the present embodiment, four circumferential grooves 4) extending in the tire circumferential direction, and lateral grooves 5 extending in the tire axial direction. In the present embodiment, the circumferential grooves 4 are an axially inner crown circumferential groove 4A and an axially outer shoulder circumferential groove 4B which are disposed on each side of the tire equator C.

In the present embodiment, the lateral grooves 5 include shoulder lateral grooves 5A disposed in a shoulder land portion 7 defined on the axially outer side of each shoulder circumferential groove 4B.

In the present embodiment, the groove depths d of the grooves 3 are configured so that the bottoms of the grooves 3 are located on or radially outside a virtual line VL predetermined in the meridian cross-section of the tire under its standard state with no tire load.

It can be said that the virtual line VL is for defining the maximum values of the groove depths d of the grooves 3.

The grooves 3 in tread shoulder portions are prevented from having excessively large groove depths d. This can reduce noise caused by the grooves 3.

The virtual line VL helps to reduce the thickness t of the tread rubber 2g of the tread portion 2, which can reduce the weight of the tire 1 and improve the fuel efficiency of the tire 1. The thickness t of the tread rubber 2g is defined as the distance between the radially outer surface 2b of the tread portion 2 and a tread reinforcing belt layer B disposed in the tread portion 2.

The virtual line VL is a line positioned radially inside the radially outer surface 2b of the tread portion 2 and contacting with a reference virtual circle Vc0 and a first virtual circle Vc1.

The reference virtual circle Vc0 is a circle having a reference radius r0 and the center positioned on the tire equatorial plane C.

The first virtual circle Vc1 is a circle having a first radius r1 and the center positioned at a first position P1 on the radially outer surface 2b spaced apart from the tire equator C in the tire axial direction.

The virtual line VL is uniquely-defined by the reference virtual circle Vc0 and the first virtual circle Vc1 defined on each sides in the tire axial direction of the reference virtual circle Vc0. such virtual line VL makes it unnecessary to obtain the ground contact lengths L at the respective axial positions of the grooves 3. This can reduce the time required for determining the groove depths d of the grooves 3 based on the ground contact lengths L.

In the present embodiment, the reference radius r0 is defined based on the groove depth d of the circumferential groove 4 disposed adjacently to the tire equator C. Specifically, the reference radius r0 is set to a value equal to the radial distance measured at the tire equator C between the radially outer surface 2b and a curved line having the same radius R of curvature as the radially outer surface 2b and drawn passing through the deepest positions of the groove bottoms of the two crown circumferential grooves 4A disposed adjacently to the tire equator C on both sides thereof.

As shown in Figs. 1 and 2, the above-mentioned first position P1 is spaced apart from the tire equator C by an axial distance W1 of from 75% to 80% of the half ground contact width Tw in this example.

In this example, the first position P1 is located in the above-mentioned shoulder land portion 7 axially outside the shoulder circumferential groove 4B.

The ground contact length L at the first position P1 is referred to as the first ground contact length L1.

In the present embodiment, the first ground contact length L1 is equal to the above-mentioned shoulder ground contact length.

It is preferable that the first radius r1 is determined by the following equation (1):

$$r1 = r0 \times L1 / \{L1 + \alpha (L0-L1)\} \quad ... \quad eq.(1)$$

wherein

r0 is the reference radius,
L0 is the crown ground contact length,
L1 is the first ground contact length, and
$\alpha$ is a correction coefficient.
Such equation (1) is useful for uniquely defining the virtual line VL.

The correction coefficient $\alpha$ is preferably in a range from 0.5 to 1.0.

Such correction coefficient $\alpha$ is useful for optimizing the groove depths d of the grooves 3, and can improve the noise performance and reduce the weight while maintaining the excellent wear resistance of the tire 1. Further, such correction coefficient $\alpha$ can suppress deformation of the belt layer B and improve the durability of the tire 1.

From this point of view, the correction coefficient $\alpha$ is more preferably in a range from 0.6 to 0.9, still more preferably 0.7 to 0.8.

It is preferable that the virtual line VL further contact with a second virtual circle Vc2 having a second radius r2 and the center positioned at a second position P2 on the radially outer surface 2b spaced apart from the tire equator C by an axial distance W2 of from 90% to 95% of the half ground contact width Tw.

Such virtual line VL can be defined more accurately by the reference virtual circle Vc0, the first virtual circle Vc1, and the second virtual circle Vc2.

The second position P2 is located in the above-mentioned shoulder land portion 7 in this example.

The ground contact length L at the second position P2 is referred to as the second ground contact length L2.

It is preferable that the second radius r2 is determined by the following equation (2):

$$r2 = r0 \times L2 / \{L2 + \alpha (L0-L2)\} \quad ... \quad eq.(2)$$

wherein

r0 is the reference radius,
L0 is the crown ground contact length,
L2 is the second ground contact length, and
$\alpha$ is the correction coefficient.
Such equation (2) is useful for uniquely defining the virtual line VL.

It may be possible that the virtual line VL further contact with
a third virtual circle Vc3 having a third radius r3 and the center positioned at a third position P3 on the radially outer surface 2b spaced apart from the tire equator C by an axial distance W3 of from 40% to 55% of the half ground contact width Tw.

Such virtual line VL can be defined more accurately by the reference virtual circle Vc0, the first virtual circle Vc1, the second virtual circle Vc2, and the third virtual circle Vc3.

The third position P3 is located in a middle land portion 6 between the crown circumferential groove 4A and the shoulder circumferential groove 4B in this example.

The ground contact length L at the third position P3 is referred to as the third ground contact length L3.

It is preferable that the third radius r3 is determined by the following equation (3):

$$r3 = r0 \times L3 / \{L3 + \alpha (L0-L3)\} \quad ... \quad eq.(3)$$

wherein

r0 is the reference radius,
L0 is the crown ground contact length,
L3 is the third ground contact length, and
α is the correction coefficient.
Such equation (3) is useful for uniquely defining the virtual line VL.

In the present embodiment, the groove bottoms of the circumferential grooves 4 are positioned on the virtual line VL. Namely, the groove depths d of the circumferential grooves 4 are so defined. Thus, the virtual line VL can easily and appropriately define the groove depths d of the circumferential grooves 4.

In the present embodiment, the groove bottoms of the lateral grooves 5 are located on the virtual line VL or radially outside the virtual line VL. Namely, the groove depths d of the lateral grooves 5 are defined in this way. Thus, the virtual line VL can easily and appropriately define maximum values of the groove depths d of the lateral grooves 5.

The maximum value for the groove depth d of a groove 3 at an axial position can be determined based on the following equation (4) which is a generalization of the above equations (1) to (3):

$$\mathrm{Max.\ d = r0\ x\ L\ /\ \{L + \alpha\ (L0-L)\}\ ...\ eq.(4)}$$

wherein

α is the correction coefficient,
r0 is the reference radius,
L0 is the crown ground contact length, and
L is the ground contact length of the ground contacting patch 2a at the axial position of the groove 3.

Such equation (4) is useful since the groove depth d can be determined without defining the virtual line VL, in particular, when it takes time to define the virtual line VL.

That is, given that L is a ground contact length of the ground contacting patch measured at the axial position of a target groove 3; r0 is a given value for the depth of a circumferential groove disposed on the tire equator or most adjacently to the tire equator among the circumferential grooves; L0 is a ground contact length of the ground contacting patch measured at the tire equator, and α is a coefficient between 0.5 to 1.0, then the groove depth d of the target groove 3 is set to be equal to or less than a value of the right-hand side of the equation (4), and preferably more than 80% of this value. For example, when the target groove 3 is the circumferential groove 4, the groove depth d is set to be equal to the obtained value. When the target groove 3 is the lateral groove 5, the groove depth d is set to be equal to or less than the obtained value, and preferably more than 80% of the obtained value.

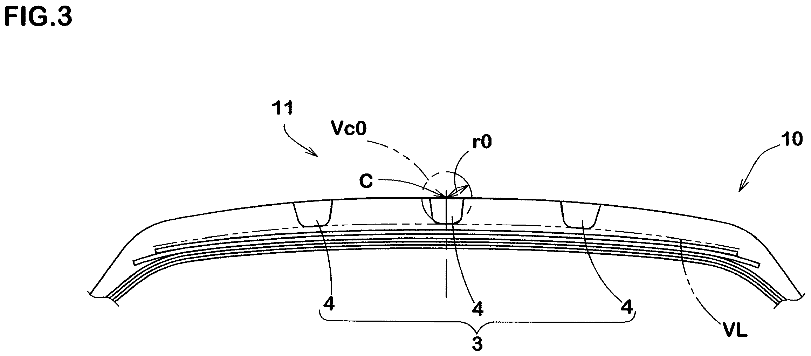

Fig. 3 is a cross-sectional view schematically showing the tread portion 11 of a tire 10 as another embodiment taken along a meridian cross-section of the tire under its standard state. As shown, the tread portion 11 is provided with three circumferential grooves 4. In this example, one of the circumferential grooves 4 is disposed on the tire equator C.

In this embodiment, the reference radius r0 of the reference virtual circle Vc0 is equal to the groove depth d of the circumferential groove 4 disposed on the tire equator C. In such reference virtual circle Vc0, the definition of the reference radius r0 is clear, and the virtual line VL can be easily set.

Next, a method for determining tread groove depths d of the tire 1 of which tread portion 2 is provided with grooves 3 will be described with reference to Figs. 1 to 3.

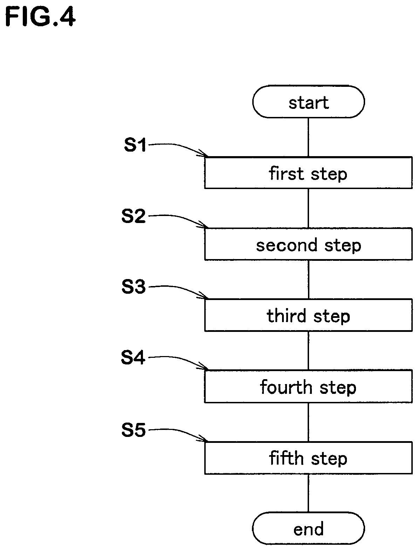

Fig. 4 is a flowchart showing a method for determining groove depths.

As shown in Fig. 4, this method comprises a first step S1 of determining the ground contacting patch 2a of the tread portion 2 which occurs when the tire 1 under its standard state, is put on a flat horizontal surface at a camber angle of zero and loaded with the standard tire load.

In the first step S1, the ground contacting patch 2a can be determined through a simulation using a computer or an experiment using an actual tire in order to obtain the accurate shape of the ground contacting patch 2a.

As shown in Fig. 4, the method further comprises, after the first step S1, a second step of obtaining the ground contact lengths L in the tire circumferential direction of the ground contacting patch 2a at respective axial positions P. In the second step S2, for example, obtained are the ground contact lengths L at a axial position of the tire equator C and at least one of the first position P1, the second position P2, and the third position P3. Thus, it is not necessary to obtain the ground contact lengths L at every axial positions P, therefore, the processing time can be shortened.

As shown in Fig. 4, the method further comprises, after the first step S2, a third step S3 of obtaining virtual radii r based on the ground contact lengths L measured at the predetermined positions P in the tire axial direction. More specifically, each virtual radius r is equal to a value obtained from the right-hand side of the above-mentioned equation (4). For example, the virtual radii r may include the reference radius r0 of the reference virtual circle Vc0, the first radius r1 of the first virtual circle Vc1, the second radius r2 of the second virtual circle Vc2, and the third radius r3 of the third virtual circle Vc3 are used. In the third step S3 in this example, there are obtained the reference radius r0 and at least one of the first radius r1, the second radius r2, and the third radius r3.

The method further comprises, after the third step S3, a fourth step S4 of defining the virtual line VL contacting with virtual circles Vc respectively having the obtained virtual radii r and centers positioned on the radially outer surface 2b of the tread portion 2 in the meridian cross-section of the tire under its standard state with no tire load.

The method further comprises, after the fourth step S4, a fifth step S5 of determining the groove depths d of the grooves 3 so that the groove bottoms of the grooves 3 are positioned on the virtual line VL or radially outside the virtual line VL.

By setting the groove depths in this way, the groove depths d of the grooves 3 are respectively optimized for the amounts of wear which are different from each other, depending on the positions in the tire axial direction. As a result, the tire noise caused by the grooves 3 can be reduced.

Thus, the method of determining the groove depths can improve the noise performance of the tire while maintaining the excellent wear resistance of the tire.

While detailed description has been made of preferable embodiments of the present invention, the present invention can be embodied in various forms within the scope of the appended claims.

Comparison tests

Based on the tire structure shown in Fig. 1, pneumatic tires of size 255/65R18 (Rim size 18x7.5J) were experimentally manufactured as test tires including working example tires Ex.1 and Ex.2 in which the groove depths of the circumferential grooves were determined according to the equations (1) and (2), and a comparative example tire Ref.1 in which the circumferential grooves had the same groove depths. Then, the test tires were tested for the wear resistance, noise performance and durability, and measured for the tire weight. Specifications of the test tires are shown in Table 1.

< Wear resistance test >

The test tires were mounted on all wheels of a test car (passenger car), and the test car was run for 20,000 km on dry paved roads. Then, the amount of wear was measured at different axial positions, and the amount of wear at the position where the wear was most progressed, was obtained.
The results are indicated in Table 1 by an index based on Comparative Example tire Ref.1 being 100, wherein the larger the value, the better the wear resistance.

< Noise performance test >

The test tires were mounted on all wheels of the test car. Then, the test car was run on a road noise measuring test course, and the pass-by noise was measured.
The results are indicated in Table 1 by an index based on Comparative Example tire Ref.1 being 100, wherein the larger the value, the better the noise performance.

< Durability test >

Each test tire in the standard state was attached to a tire drum tester, and run for 10,000 km under the standard tire load. Then, the tire was inspected to measure a total length of separation occurred at the edges of the belt layer.
The results are indicated in Table 1 by an index based on Comparative Example tire Ref.1 being 100, wherein the larger the value, the better the durability.

< Fuel efficiency test >

Each test tire was measured for the weight. The results are indicated in Table 1 by an index based on Comparative Example tire Ref.1 being 100, wherein the larger the value, the lighter the tire weight and the better the fuel efficiency.

Table 1

| Tire | Ref.1 | Ex. 1 | Ex. 2 |
|---|---|---|---|
| Correction coefficient $\alpha$ | - | 0.5 | 1.0 |

(continued)

| Tire | Ref.1 | Ex. 1 | Ex. 2 |
| --- | --- | --- | --- |
| Wear resistance | 100 | 100 | 100 |
| Noise performance | 100 | 103 | 105 |
| Fuel efficiency | 100 | 103 | 105 |
| Durability | 100 | 105 | 103 |

From the test results, it was confirmed that, according to the present invention, the noise performance and fuel efficiency are improved, while maintaining comparable wear resistance to that of the comparative example, and the durability is also improved.

**Description of the reference signs**

1     tire
2     tread portion
2a    ground contacting patch
3     grooves

**Claims**

1. A tire (1) comprising a tread portion (2) provided with a plurality of grooves (3), wherein

   ground contact lengths (L) of a ground contacting patch (2a) measured in the tire circumferential direction at axial positions (P) of the respective grooves (3), and groove depths (d) of the respective grooves (3) are in a relationship in which the groove depth (d) increases or decreases as the ground contact length (L) increases or decreases, wherein
   the ground contacting patch (2a) is that of the tread portion (2) when the tire in its standard state is placed on a flat horizontal surface at a camber angle of zero, and loaded with a standard tire load,
   the standard state is such that the tire (1) is mounted on a standard wheel rim and inflated to a standard tire pressure, and
   the grooves (3) include circumferential grooves (4) extending in the tire circumferential direction,
   **characterized in that**
   when each circumferential groove (4) is a target groove, L is a ground contact length of the ground contacting patch (2a) measured at the axial position of a target groove; r0 is a given value for the depth of a circumferential groove disposed on the tire equator or most adjacently to the tire equator among circumferential grooves; L0 is a ground contact length of the ground contacting patch (2a) measured at the tire equator (C), and $\alpha$ is a coefficient between 0.5 to 1.0, then the groove depth (d) is set to be equal to the value of r0 x L / {L + $\alpha$ (L0-L)}.

2. The tire (1) according to claim 1, wherein the grooves (3) furthermore include lateral grooves (5) extending in the tire axial direction, wherein,
   when the target groove is a lateral groove (5), the groove depth (d) is set to be equal to or less than the value of r0 x L / {L + $\alpha$ (L0-L)}.

3. The tire (1) according to claim 2, wherein
   the groove depth (d) is more than 80% of the value of r0 x L / {L + $\alpha$ (L0-L)}.

**Patentansprüche**

1. Reifen (1) mit einem Laufflächenabschnitt (2), der mit einer Vielzahl von Rillen (3) versehen ist,
   wobei

Bodenkontaktlängen (L) einer Bodenkontaktfläche (2a), gemessen in der Reifenumfangsrichtung an axialen Positionen (P) der jeweiligen Rillen (3), und Rillentiefen (d) der jeweiligen Rillen (3) in einer Beziehung stehen, in der die Rillentiefe (d) zunimmt oder abnimmt, wenn die Bodenkontaktlänge (L) zunimmt oder abnimmt, wobei die Bodenkontaktfläche (2a) diejenige des Laufflächenabschnitts (2) ist, wenn der Reifen in seinem Standardzustand auf einer flachen horizontalen Oberfläche mit einem Sturzwinkel von Null platziert und mit einer Standardreifenlast belastet ist,

der Standardzustand derart ist, dass der Reifen (1) auf eine Standardradfelge aufgezogen und auf einen Standardreifendruck aufgepumpt ist, und

die Rillen (3) Umfangsrillen (4) umfassen, die sich in der Reifenumfangsrichtung erstrecken,

**dadurch gekennzeichnet, dass**,

wenn jede Umfangsrille (4) eine Zielrille ist, L eine an der axialen Position einer Zielrille gemessene Bodenkontaktlänge der Bodenkontaktfläche (2a) ist; r0 ein vorgegebener Wert für die Tiefe einer auf dem Reifenäquator oder am nächsten zum Reifenäquator unter den Umfangsrillen angeordneten Umfangsrille ist; L0 eine am Reifenäquator (C) gemessene Bodenkontaktlänge der Bodenaufstandsfläche (2a) ist, und $\alpha$ ein Koeffizient zwischen 0,5 und 1,0 ist, dann die Rillentiefe (d) gleich dem Wert von r0 x L / {L + $\alpha$ (L0-L)} eingestellt ist.

2. Reifen (1) nach Anspruch 1, wobei

die Rillen (3) Querrillen (5) umfassen, die sich in der Reifenaxialrichtung erstrecken, wobei, wenn die Zielrille eine Querrille (5) ist, die Rillentiefe (d) so eingestellt ist, dass sie gleich oder kleiner als der Wert von
r0 x L / {L + $\alpha$ (L0-L)} eingestellt ist.

3. Reifen (1) nach Anspruch 2, wobei die Rillentiefe (d) größer als 80% des Wertes von r0 x L / {L + $\alpha$ (L0-L)} ist.

## Revendications

1. Pneumatique (1) comprenant une portion formant bande de roulement (2) dotée d'une pluralité de rainures (3), dans lequel

des longueurs de contact au sol (L) d'un patch de mise en contact au sol (2a) mesurées dans la direction circonférentielle du pneumatique à des positions axiales (P) des rainures respectives (3), et des profondeurs de rainure (d) des rainures respectives (3) sont dans une relation dans laquelle la profondeur de rainure (d) augmente ou diminue lorsque la longueur de contact au sol (L) augmente ou diminue, dans lequel le patch de mise en contact au sol (2a) est celui de la portion formant bande de roulement (2) quand le pneumatique dans son état standard est placé sur une surface horizontale plate sous un angle de cambrure de zéro, et est chargé avec une charge de pneumatique standard,

l'état standard est tel que le pneumatique (1) est monté sur une jante de roue standard et est gonflé à une pression de pneumatique standard, et

les rainures (3) incluent des rainures circonférentielles (4) s'étendant dans la direction circonférentielle du pneumatique,

**caractérisé en ce que**

quand chaque rainure circonférentielle (4) est une rainure cible, L est une longueur de contact au sol du patch de mise en contact au sol (2a) mesurée à la position axiale d'une rainure cible ; r0 est une valeur donnée pour la profondeur d'une rainure circonférentielle disposée sur l'équateur du pneumatique ou de manière la plus adjacente à l'équateur du pneumatique parmi les rainures circonférentielles ; La est une longueur de contact au sol du patch de mise en contact au sol (2a) mesurée au niveau de l'équateur du pneumatique (C), et $\alpha$ est un coefficient allant de 0,5 à 1,0,

alors la profondeur de rainure (d) est fixée comme étant égale à la valeur de

$$r0 \text{ x } L / \{L + \alpha (L0\text{-}L)\}.$$

2. Pneumatique (1) selon la revendication 1, dans lequel les rainures (3) incluent en outre des rainures latérales (5) s'étendant dans la direction axiale du pneumatique, dans lequel, quand la rainure cible est une rainure latérale (5), la profondeur de rainure (d) est fixée comme étant égale ou inférieure à la valeur de

$$r0 \times L / \{L + \alpha \, (L0\text{-}L)\}.$$

3. Pneumatique (1) selon la revendication 2, dans lequel la profondeur de rainure (d) est supérieure à 80 % de la valeur de

$$r0 = x \, L / \{L + \alpha \, (L0\text{-}L)\}.$$

FIG.1

EP 3 967 520 B1

Tw
2
W2
Vc2
1
W1
Vc1
P
W
W3
Vc3
2b
Vc0   C
r0   6   P3
r3
P1
r1
P2
r2
7
Te
t   d
2g
Te
B
5   4   4
4A   4B   5A
VL
3
4   5
R   R
3

# FIG.2

EP 3 967 520 B1

FIG.3

# FIG.4

**EP 3 967 520 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019182339 A
- DE 102008055498 A1
- JP 2014168997 A
- US 2019381836 A1